# EUROPEAN PATENT APPLICATION

(11) **EP 4 621 260 A1**
(43) Date of publication of application: **24.09.2025**
(21) Application number: 25163489.5
(22) Date of filing: 13.03.2025
(51) Int. Cl.: F16F 9/348, F16F 9/512, F16F 9/32

(54) **DAMPER ASSEMBLY AND PISTON THEREFOR**

(30) Priority: 20.03.2024 US 202463567670 P; 27.01.2025 CN 202510127612
(71) Applicant: BeijingWest Industries Co. Ltd., 102400 Beijing (CN)
(72) Inventor: SLUSARCZYK, Pawel, 32-400 ul. Sredniawskiego 10, Myslenice (PL); FRANCZYK, Bartlomiej, 31-066 Ul. Skawinska 18/14, Kraków (PL)
(74) Representative: Lukaszyk, Szymon

(57) **Abstract**

A damper assembly and a piston therefor. The piston includes a pressure-sensitive bleed valve which includes at least one working disc and an outer disc that is disposed radially outside of the at least one working disc. The at least one working disc is abutted against the outer disc in a radial direction, and is deflectable in two opposite directions along the center axis for regulating flow of the working fluid through the piston during the compression stroke and the rebound stroke.

## Description

### Cross-Reference to Related Applications

The present disclosure claims priority to U.S. Provisional Application No. 63/567,670, filed on March 20, 2024, and Chinese Patent Application No. 202510127612.5, filed on January 27, 2025. The afore-mentioned patent applications are hereby incorporated by reference in their entireties.

### Technical Field

The present disclosure relates generally to a damper assembly and a piston therefor.

### Background of the Invention

Shock absorbers are generally designed to provide a desired level of damping forces in a vehicle suspension. In order to ensure appropriate vehicle dynamics, their operation can be divided into two zones of low and high velocities. The division of the characteristics into these two zones is achieved by using an appropriate valve design. At low speeds (and therefore low pressures), the oil in the shock absorber flows through relatively small orifices with a constant cross-section. In the high speed range, i.e. after exceeding a given pressure level, the pre-tensioned relief valves (usually in the form of a shim-valves or blow-off valves) open and the oil flow becomes less suppressed. As a result, a large damping coefficient is obtained in the low speed range, while in the high speed range it is relatively small.

A significant disadvantage of most common vehicle damper valves is that the damping characteristics in the low speed range correspond to simple flow characteristics of oil through a constant orifice, also called constant bleed. As a result, the damping force is close to zero in the ultra-low speed range, and increases very progressively as velocity increases. The flow characteristic within the lowest speed range is not able to be tuned. This limitation negatively affects both handling and ride comfort.

Accordingly, more complex damper valve designs may be required to mitigate or eliminate these negative effects and to provide a damper with tunable characteristics over low speed ranges. Additionally, there remains a need for improvements to such damper valves to improve reliability, manufacturability, and to reduce cost.

### Summary of the invention

The present disclosure in its broadest aspect provides a damper assembly and a piston therefor.

It is one aspect of the present disclosure to provide a damper assembly including a housing, a piston, a piston rod, a compression valve, a rebound valve, and a pressure-sensitive bleed valve. The housing defines a fluid chamber extending along a center axis for containing a working fluid. The piston is disposed slidably in the fluid chamber, dividing the fluid chamber into a rebound chamber and a compression chamber. The piston rod extends along the center axis and is coupled to the piston for moving the piston between a compression stroke and a rebound stroke. The piston defines at least one compression channel, at least one rebound channel, and at least one additional channel, for allowing the working fluid to flow through the piston during the compression stroke and the rebound stroke. The compression valve covers the at least one compression channel for regulating flow of the working fluid through the piston during the compression stroke. The rebound valve covers the at least one rebound channel for regulating flow of the working fluid through the piston during the rebound stroke. The pressure-sensitive bleed valve covers the at least one additional channel, and includes at least one working disc and an outer disc that is disposed radially outside of the at least one working disc. The at least one working disc is abutted against the outer disc in a radial direction, and is deflectable in two opposite directions along the center axis for regulating flow of the working fluid through the piston during the compression stroke and the rebound stroke.

In an embodiment of the present disclosure, the at least one compression channel is in fluid communication with the at least one rebound channel through the at least one additional channel; and the at least one working disc closes the fluid communication by being abutted against the outer disc, and opens the fluid communication by being deflected in any of the two opposite directions along the center axis.

In an embodiment of the present disclosure, the at least one additional channel is radially spaced from the at least one compression channel and the at least one rebound channel, and is axially spaced from the rebound valve and the compression valve; and the pressure-sensitive bleed valve is axially located between the compression valve and the at least one additional channel and axially spaced from them.

In an embodiment of the present disclosure, the piston defines a first groove through which the at least one compression channel is in fluid communication with the at least one additional channel, and the pressure-sensitive bleed valve is located in the first groove.

In an embodiment of the present disclosure, the damper assembly further includes: a supporting disc disposed on a surface of the compression disc stack facing the pressure-sensitive bleed valve to support the compression disc stack and prevent it from excessive deflection towards the pressure-sensitive bleed valve during the rebound stroke.

In an embodiment of the present disclosure, the rebound valve defines a flow channel through which, in a state in which the rebound valve is not deflected, the compression chamber is in communication with the at least one rebound channel.

In an embodiment of the present disclosure, the flow channel is formed by a plurality of radially external slots provided on at least one disc of the rebound valve.

In an embodiment of the present disclosure, the piston defines a second groove through which the at least one rebound channel is in fluid communication with the at least one additional channel, and through which the flow channel is in fluid communication with the at least one additional channel.

In an embodiment of the present disclosure, the at least one working disc includes: a main working disc abutted against the outer disc in the radial direction; at least one compression working disc disposed on a surface of the main working disc facing the compression chamber, having an outer diameter smaller than that of the main working disc; and at least one rebound working disc disposed on another surface of the main working disc facing the rebound chamber, having an outer diameter smaller than that of the main working disc.

In an embodiment of the present disclosure, the damper assembly further includes: a mounting ring via which the outer disc is clamped against the piston, having an inner diameter larger than that of the outer disc; and a spacer via which the at least one working disc is clamped against the piston, having an outer diameter smaller than that of the at least one working disc.

It is another aspect of the present disclosure to provide a piston for a damper assembly. The piston includes a piston body, a compression valve, a rebound valve, and a pressure-sensitive bleed valve. The piston body defines at least one compression channel, at least one rebound channel, and at least one additional channel, for allowing the working fluid to flow through the piston body during the compression stroke and the rebound stroke. The compression valve covers the at least one compression channel for regulating flow of the working fluid through the piston body during the compression stroke. The rebound valve covers the at least one rebound channel for regulating flow of the working fluid through the piston body during the rebound stroke. The pressure-sensitive bleed valve covers the at least one additional channel, and includes at least one working disc and an outer disc that is disposed radially outside of the at least one working disc. The at least one working disc is abutted against the outer disc in a radial direction, and is deflectable in two opposite directions along the center axis for regulating flow of the working fluid through the piston body during the compression stroke and the rebound stroke.

In an embodiment of the present disclosure, the at least one compression channel is in fluid communication with the at least one rebound channel through the at least one additional channel; and the at least one working disc closes the fluid communication by being abutted against the outer disc, and opens the fluid communication by being deflected towards any of the two opposite axial directions.

In an embodiment of the present disclosure, the at least one additional channel is radially spaced from the at least one compression channel and the at least one rebound channel, and is axially spaced from the rebound valve and the compression valve; and the pressure-sensitive bleed valve is axially located between the compression valve and the at least one additional channel and axially spaced from them.

In an embodiment of the present disclosure, the piston body defines a first groove through which the at least one compression channel is in fluid communication with the at least one additional channel, and the pressure-sensitive bleed valve is located in the first groove.

In an embodiment of the present disclosure, the piston further includes a supporting disc disposed on a surface of the compression disc stack facing the pressure-sensitive bleed valve to support the compression disc stack and prevent it from excessive deflection towards the pressure-sensitive bleed valve during the rebound stroke.

In an embodiment of the present disclosure, the rebound valve defines a flow channel for communicating a compression chamber located on a side of the piston with the at least one rebound channel when the rebound valve is not deflected.

In an embodiment of the present disclosure, the flow channel is formed by a plurality of radially external slots provided on at least one disc of the rebound valve.

In an embodiment of the present disclosure, the piston body defines a second groove through which the at least one rebound channel is in fluid communication with the at least one additional channel, and through which the flow channel is in fluid communication with the at least one additional channel.

In an embodiment of the present disclosure, the at least one working disc includes: a main working disc abutted against the outer disc in the radial direction; at least one compression working disc disposed on a surface of the main working disc facing the rebound valve, having an outer diameter smaller than that of the main working disc; and at least one rebound working disc disposed on another surface of the main working disc facing the compression valve, having an outer diameter smaller than that of the main working disc.

In an embodiment of the present disclosure, the piston further includes: a mounting ring via which the outer disc is clamped against the piston body, having an inner diameter larger than that of the outer disc; and a spacer via which the at least one working disc is clamped against the piston body, having an outer diameter smaller than that of the at least one working disc.

The pressure-sensitive bleed valve of the present disclosure provides an appropriate level of damping from near-zero damper speed, and a more linear way of increasing force until reaching the knee-point (the point where relief valve open).

### Brief description of the drawings

Other advantages of the present disclosure will be readily appreciated, as the same becomes better understood by reference to the following detailed description when considered in connection with the accompanying drawings, in which:
Fig. 1 shows a cross-sectional view of a damper assembly constructed in accordance with one embodiment of the present disclosure;
Fig. 2 shows a cross-sectional view of the piston and the piston rod including a pressure-sensitive bleed valve assembly in accordance with one embodiment of the present disclosure;
Fig. 3 shows an exploded view of the piston of Fig. 2;
Fig. 4 shows a graph of force vs. velocity, with plots showing damping characteristics of a conventional valve and a pressure sensitive bleed valve in accordance with an aspect of the present disclosure, and showing a tuning range for the pressure sensitive bleed valve of the present disclosure;
Fig. 5 shows a cutaway cross-sectional view of the piston, including the pressure-sensitive bleed valve of the present disclosure, and showing oil flow paths therethrough in rebound and compression strokes and for low damper velocities;
Fig. 6 shows a cutaway cross-sectional view of the piston, including the pressure-sensitive bleed valve of the present disclosure, and showing oil flow paths therethrough in rebound and compression strokes and for high damper velocities; and
Fig. 7 shows another cross-sectional view of the piston in accordance with one embodiment of the present disclosure.

### Description of the Enabling Embodiments

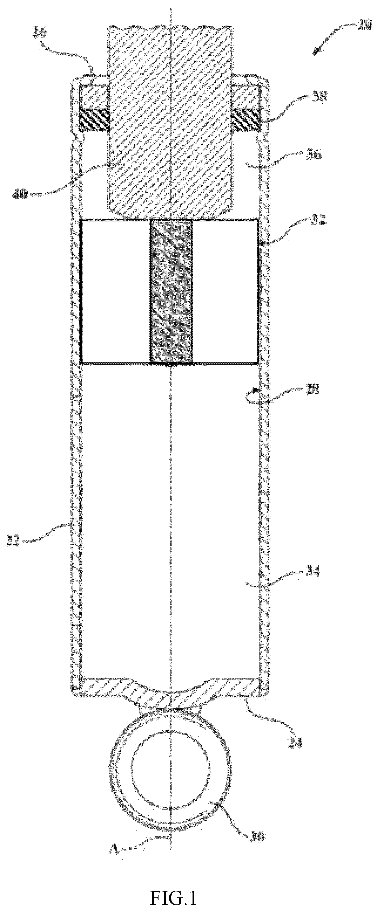

Referring to the Figures, in which like numerals indicate corresponding parts throughout the several views, a damper assembly 20 with a pressure-sensitive bleed valve 51, constructed in accordance with the enabling embodiment, is generally shown in FIGS. 1 to 7.

Fig. 1 shows the damper assembly 20 with a monotube configuration. However, the principles of the present disclosure may be implemented using other damper configurations, such as a twin-tube configuration.

As shown in Fig. 1, the damper assembly 20 includes a housing 22, having a generally tubular shape, disposed annularly about a center axis A and extending between a first end 24 and a second end 26. The housing 22 defines a fluid chamber 28 extending between the first end 24 and the second end 26 for containing a working fluid. A mounting ring 30, having a generally circular shape, is disposed at the first end 24 of the housing 22 for attaching the housing 22 to the vehicle. A piston 32, having a generally cylindrical shape, is slidably disposed in the fluid chamber 28 and divides the fluid chamber 28 into a compression chamber 34 and a rebound chamber 36. The compression chamber 34 extends between the first end 24 and the piston 32. The rebound chamber 36 extends between the second end 26 and the piston 32.

A rod guide 38 is disposed in the rebound chamber 36 and attached to the second end 26 to close the fluid chamber 28. A piston rod 40 extends through the rod guide 38, along the center axis A, and attaches to the piston 32 for moving the piston 32 between a compression stroke and a rebound stroke. During the compression stroke, the piston 32 and the piston rod 40 moves in the fluid chamber 28 toward the first end 24 of the housing 22. During the rebound stroke, the piston 32 and the piston rod 40 moves in the fluid chamber 28 toward the second end 26 of the housing 22.

The term "compression" as used herein with reference to particular elements of the damper refers to these elements or parts of elements which are adjacent to or face the compression chamber 34 or, in a case of working liquid flow direction, it refers to this flow direction that takes place during the compression stroke of the damper. Similarly, the term "rebound" as used in this specification with reference to particular elements of the damper refers to these elements or these parts of particular elements which are adjacent to or face the rebound chamber 36 or, in a case of working liquid flow direction, it refers to this flow direction that takes place during the rebound stroke of the damper.

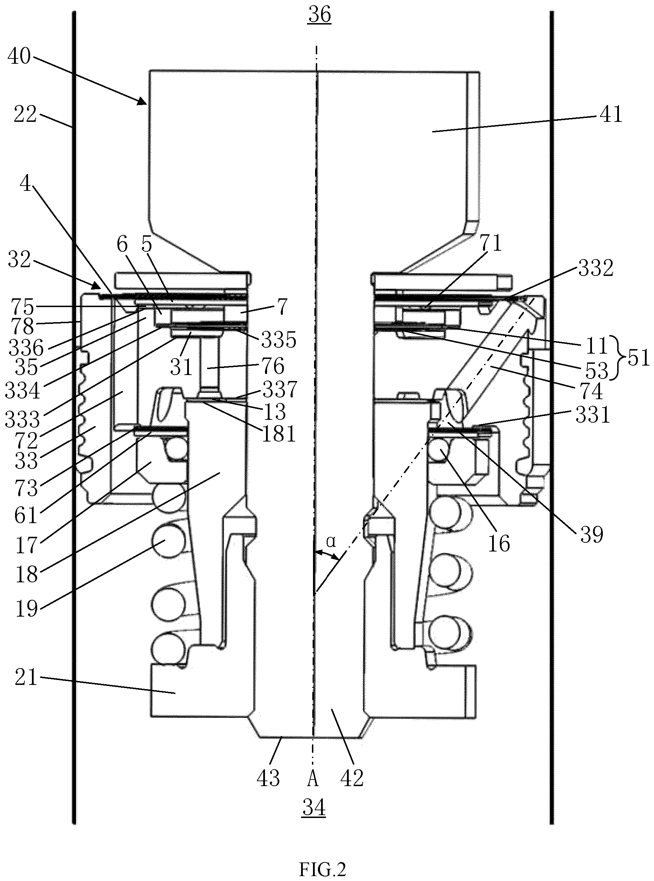

Fig. 2 shows a cross-sectional view of the piston 32 and the piston rod 40, including a pressure-sensitive bleed valve 51, which may also be called a Tunable Pressure-Sensitive Bleed Valve. In the presented arrangement shown in Fig. 2, the pressure-sensitive bleed valve 51 is integrated with a blow-off piston valve. However, the pressure-sensitive bleed valve 51 can be implemented work with other types of piston valves (e.g. shim-valves) or with bottom valves of twin-tube shock absorbers.

As shown in FIGS. 2-3, the piston rod 40 includes a rod piston body 41 having a cylindrical shape, and a rod extension 42 extending from the rod piston body 41 to the rod end 43 and having a generally cylindrical shape with a diameter smaller than that of the rod piston body 41.

As also shown in FIGS. 2-3, the piston 32 includes a piston body 33 disposed around the rod extension 42 and having a generally cylindrical shape. The piston body 33 of the piston 32 has a compression surface 331 facing the compression chamber 34 and a rebound surface 332 facing the rebound chamber 36.

The piston body 33 defines a plurality of channels 72, 74, 76 for allowing the working fluid to flow through the piston 32 during the compression stroke and the rebound stroke. According to an embodiment of the present disclosure, the piston body 33 defines at least one compression channel 72, at least one rebound channels 74, and at least one additional channel 76.

According to an embodiment of the present disclosure, the at least one compression channel 72, radially spaced from an exterior surface 78 of the piston body 33, extends from the compression surface 331 and passes through the piston body 33. The at least one rebound channel 74, circumferentially spaced from the at least one compression channel 72, extends from the exterior surface 78 toward the compression surface 331 at an oblique angle relative to the center axis A. The at least one additional channel 76, radially located between the center axis A and the at least one compression channel 72 and between the center axis A and the at least one rebound channel 74, extends along the piston body 33. The at least one compression channel 72 is in fluid communication with the at least one rebound channel 74 through the at least one additional channel 76.

According to an embodiment of the present disclosure, the piston body 33 defines a first groove 31 through which the at least one compression channel 72 is in fluid communication with the at least one additional channel 76, and a second groove 39 through which the at least one rebound channel 74 is in fluid communication with the at least one additional channel 76. The first groove 31 extends about the center axis A and axially extends from the rebound surface 332 to the at least one additional channel 76. The second groove 39 extends about the center axis A and axially extends from the compression surface 331 to the at least one additional channel 76. In other words, the at least one additional channel 76 is axially located between the first groove 31 and the second groove 39. The first groove 31 and the second groove 39 are radially located between the center axis A and the at least one compression channel 72 and between the center axis A and the at least one rebound channel 74. The at least one rebound channel 74 extends from the exterior surface 78 to the second groove 39.

According to an embodiment of the present disclosure as shown in FIGS. 2-3, the at least one compression channels 72 includes a plurality of compression channels 72. The plurality of compression channels 72 are located about the center axis A and circumferentially spaced from one another. The compression channels 72 extends in a parallel relationship with the center axis A. The at least one rebound channels 74 includes a plurality of rebound channels 74. The plurality of rebound channels 74 are located about the center axis A and circumferentially spaced from one another. Each rebound channel 74 of the set of rebound channels 74 is circumferentially located between adjacent compression channels 72 of the set of compression channels 72. The rebound channels 74 extend at an oblique angle α relative to the center axis A. According to an embodiment of the present disclosure, the oblique angle α is less than 90°. The at least one additional channel 76 includes a plurality of additional channels 76 each of which extends along the piston body 33 in a parallel relationship with the center axis A. The plurality of additional channels 76 are radially located between the center axis A and the compression channels 72, and circumferentially spaced from one another about the center axis A. In other words, the additional channels 76 are located closer to the center axis A than the compression channels 72 and the rebound channels 74.

As shown in FIGS. 2-3, the piston 32 includes a compression valve 4 located on the rebound surface 332. The compression valve 4 covers the at least one compression channel 72 (i.e., covers all the compression channels 72 if there is more than one compression channel 72) for regulating flow of the working fluid through the piston 32 during the compression stroke, to provide a damping force during the compression stroke. The piston 32 also includes a rebound valve 61 located on the compression surface 331 and covering the at least one rebound channel 74 (i.e., covering all the rebound channels 74 if there is more than one rebound channel 74) for regulating flow of the working fluid through the piston 32 during the rebound stroke, to provide a damping force during the rebound stroke. The at least one additional channel 76 is axially spaced from the compression valve 4 and the rebound valve 61.

As shown in FIGS. 2-3 and 7, the piston 32 includes a pressure-sensitive bleed valve 51 covering the at least one additional channel 76 (i.e., covering all the additional channel 76 if there is more than one additional channel 76), and including a working disc stack 53 and an outer disc 11 that is disposed radially outside of the working disc stack 53. The working disc stack 53 is abutted against the outer disc 11 in a radial direction, and is deflectable in two opposite directions along the center axis A for regulating flow of the working fluid through the piston 32 during both the compression stroke and the rebound stroke, to provide a damping force during both the compression and rebound strokes. It should be appreciated that "deflectable in two opposite directions along the center axis A" mean that the working disc stack 53 is capable of deflecting towards two opposite axial directions; for example, as illustrated in FIG.2, the working disc stack 53 can deflect either downwards or upwards.

The outer disc 11 and the working disc stack 53 position each other in a plane transverse to the center axis A by being abutted against each other in the radial direction, which is different from conventional compression valves or rebound valves which are positioned, such as by a compression surface or a rebound surface, in an axial direction. In other words, a disc of the working disc stack 53 with the largest diameter among the discs of the working disc stack 53 is centered inside the outer disc 11 in the radial direction. This design of pressure-sensitive bleed valve 51 in the present disclosure makes it sensitive to working-fluid pressure, even if the working-fluid pressure is small due to low damper velocities. For example, even if the outermost edge of the working disc stack 53 is only slightly deflected by a small working-fluid pressure, it allows the working fluid to flow between the outer disc 11 and the deflected working disc stack 53 to provide a damping force during the compression stroke and the rebound stroke.

The working disc stack 53 closes the fluid communication between the at least one compression channel 72 and the at least one rebound channel 74 by being abutted against the outer disc 11, and opens the fluid communication therebetween by being deflected in any of the two opposite directions along the center axis A.

During the compression stroke, the working disc stack 53 is easily deflected in a direction along the center axis A and toward the compression chamber 34 by the working-fluid pressure of the working fluid from the compression chamber 34, to allow the working fluid contained in the compression chamber 34 to flow toward the rebound chamber 36 sequentially through the at least one compression channel 72, the at least one additional channel 76 and the at least one rebound channel 74, thus providing a damping force during the compression stroke.

During the rebound stroke, the working disc stack 53 is easily deflected in a direction along the center axis A and toward the rebound chamber 36 by the working-fluid pressure of the working fluid from the rebound chamber 36, to allow the working fluid contained in the rebound chamber 36 to flow toward the compression chamber 34 sequentially through the at least one rebound channel 74, the at least one additional channel 76 and the at least one compression channel 72, thus providing a damping force during the rebound stroke.

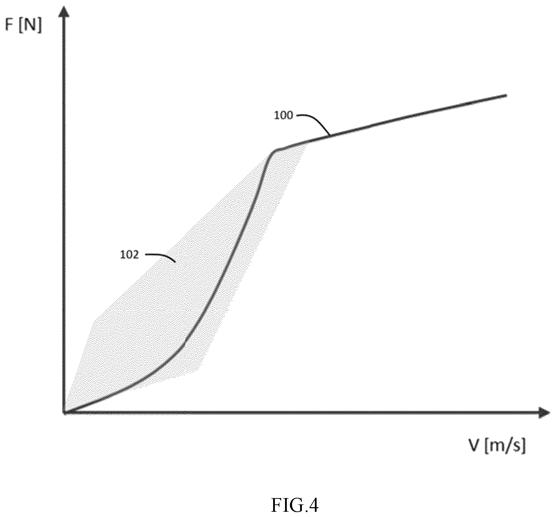

Fig. 4 shows a graph of force vs. velocity, with a plot 100 showing damping characteristics of a conventional valve and a shaded region 102 showing a tuning range for the pressure sensitive bleed valve of the present disclosure. As shown in Fig. 4, the plot 100 shows damping characteristics of a conventional valve, i.e., the damping force is close to zero in the ultra-low speed range and increases very progressively as velocity increases, and the flow characteristic within the lowest speed range is not able to be tuned. The shaded region 102 represents a tuning range for the pressure-sensitive bleed valve 51 of the present disclosure, indicating that the pressure-sensitive bleed valve 51 is able to provide an appropriate level of damping force from near-zero speed, and the flow characteristic within the lowest speed range is tunable, thus improving handling and ride comfort.

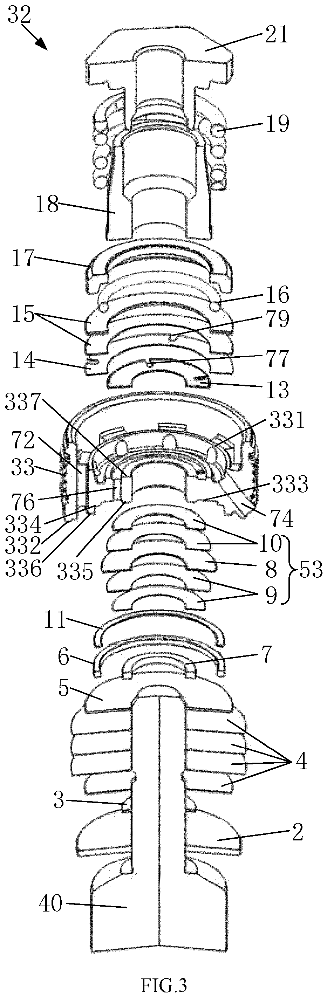

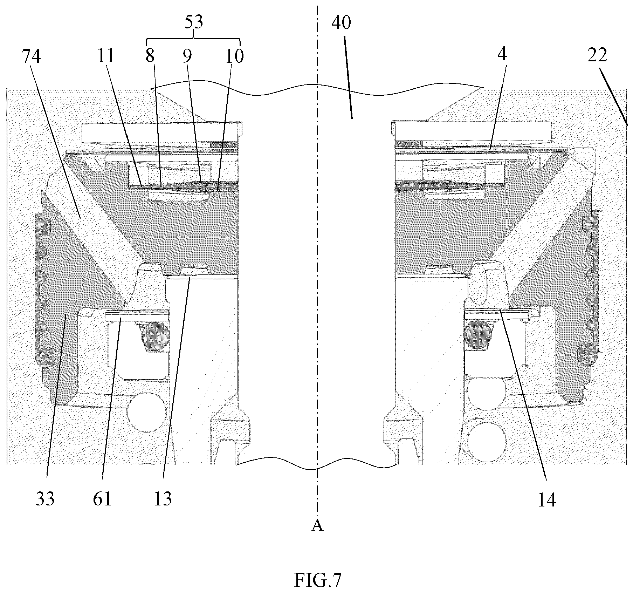

According to an embodiment of the present disclosure, as shown in FIGS. 3 and 7, the working disc stack 53 includes a main working disc 8, at least one rebound working disc 9, and at least one compression working disc 10. The main working disc 8 is abutted against the outer disc 11 in the radial direction. The at least one compression working disc 10 is disposed on a surface of the main working disc 8 facing the compression chamber 34, having an outer diameter smaller than that of the main working disc 8. The at least one rebound working disc 9 is disposed on another surface of the main working disc 8 facing the rebound chamber 36, having an outer diameter smaller than that of the main working disc 8.

According to an embodiment of the present disclosure, as shown in FIGS. 2-3, the pressure-sensitive bleed valve 51 is axially located between the compression valve 4 and the at least one additional channel 76 and spaced from them. In other words, there are spaces on both axial sides of the pressure-sensitive bleed valve 51 to allow it to deflect in any of the two opposite directions along the center axis A.

According to an embodiment of the present disclosure, the pressure-sensitive bleed valve 51 is located in the first groove 31. As best shown in Fig. 2, the piston body 33 has a surface 333 from which the at least one additional channel 76 extends toward the compression surface 331, and a surface 334 and a surface 335 that are axially located between the rebound surface 332 and the surface 333 and are spaced from them. The surface 334 and the surface 335 extend annularly about the center axis A and are perpendicular to the center axis A, and are radially spaced from one another. The outer disc 11 is located on the surface 334 and clamped against the surface 334 via a mounting ring 6 having an inner diameter larger than that of the outer disc 11. The working disc stack 53 is located on the surface 335 and clamped against the surface 335 via a spacer 7 having an outer diameter small than that of the working disc stack 53.

The piston body 33 also has a surface 336 axially located between the rebound surface 332 and the surface 334 and spaced from them. A supporting disc 5 is sandwiched between the compression valve 4 and the surface 336 and between the compression valve 4 and the spacer 7. A plurality of protrusions 71, circumferentially spaced from one another about the center axis A, are disposed on the surface 336 and in an abutment relationship with the supporting disc 5, to provide a spacing 75 between the supporting disc 5 and the surface 336, thus establishing fluid communication between the at least one compression channel 72 and the first groove 31 through the spacing 75. The supporting disc 5 has an outer diameter greater than that of the surface 336 and smaller than that of the compression valve 4. The supporting disc 5 provides support for the compression valve 4, preventing it from excessive deflection towards the surface 336 of the piston body 33 during the rebound stroke.

According to an embodiment of the present disclosure, as shown in Fig. 3, the compression valve 4 includes a plurality of discs with each disc having a generally circular shape, a retainer 2 and a spacer 3. The plurality of discs of the compression valve 4, the spacer 3 and the retainer 2 are stacked on top of one another and sandwiched between the supporting disc 5 and the rod piston body 41.

According to an embodiment of the present disclosure, the rebound valve 61 defines a flow channel 73 through which, in a state in which the rebound valve 61 is not deflected, the compression chamber 34 is in communication with the at least one rebound channel 74 during both the compression stroke and the rebound stroke for low damper velocities, thus expanding the tuning range of the damping force of the damper assembly in conjunction with the pressure-sensitive bleed valve 51.

The flow channel 73 may be formed by a plurality of radially external slots provided on at least one disc of the rebound valve 61. As best illustrated in FIGS. 2-3, the rebound valve 61 includes a main orifice disc 14 having a plurality of radially external slots 79 to form the flow channel 73. The rebound valve 61 may also include working discs 15, and all the discs of the rebound valve 61 are stacked on top of one another and sandwiched between the compression surface 331 and an outer sleeve 17 of the piston 32. As illustrated in FIGS. 2-3, the piston 32 also includes an inner sleeve 18 located on an inner side of the outer sleeve 17 and inserted into the second groove 39 without covering the at least one additional channel 76. An O-ring 16 is disposed between the rebound valve 61, the outer sleeve 17 and the inner sleeve 18 to provide a seal therebetween. The piston 32 also includes a spring 19, sleeved outside of the inner sleeve 18, having one end abutted against the outer sleeve 17 and the other end abutted against a spring bushing 21 that is fixed to both the inner sleeve 18 and the rod extension 42.

An additional orifice disc 13 is sandwiched between an additional surface 337 of the piston body 33 and an end face 181 of the inner sleeve 18, and the additional orifice disc 13 has a plurality of radially external slots 77 for controlling the flow of the working fluid between the second groove 39 and the at least one additional channel 76.

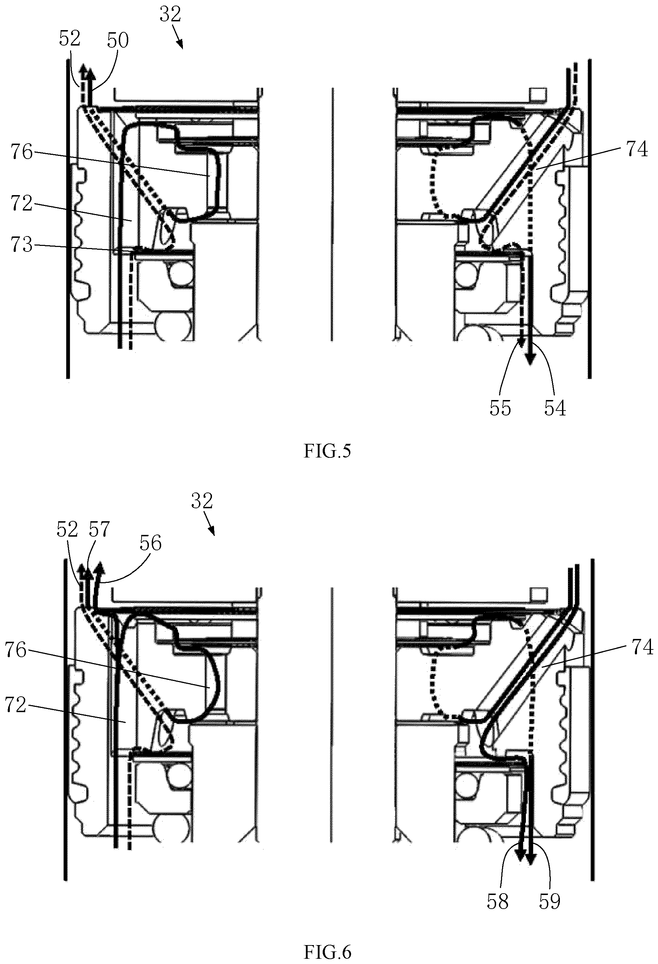

Fig. 5 shows a cutaway cross-sectional view of the piston 32, including the pressure-sensitive bleed valve 51 of the present disclosure, and showing oil flow paths therethrough in rebound and compression strokes and for low damper velocities.

As shown in Fig. 5, where arrows 50, 52 indicate the flow of the working fluid, during the compression stroke, the piston rod 40 and the piston 32 move at low velocities toward the first end 24 of the housing 22. In response to the low-speed movement of the piston rod 40 and the piston 32, the working fluid contained in the compression chamber 34 is compressed and becomes low-pressure working fluid, and moves toward the rebound chamber 36 sequentially through the at least one compression channel 72, the pressure-sensitive bleed valve 51 with the working disc stack 53 being deflected towards the piston body 33 by the low pressure of the working fluid, the at least one additional channel 76, the slots 77 of the orifice disc 13, and the at least one rebound channel 74, as indicated by the arrow 50. Meanwhile, the working fluid contained in the compression chamber 34 also moves toward the rebound chamber 36 sequentially through the flow channel 73 and the at least one rebound channel 74, as indicated by the arrow 52.

As also shown in Fig. 5, where arrows 54, 55 indicate the flow of the working fluid, during the rebound stroke, the piston rod 40 and the piston 32 move at low velocities toward the second end 26 of the housing 22. In response to the low-speed movement of the piston rod 40 and the piston 32, the working fluid contained in the rebound chamber 36 is compressed and becomes low-pressure working fluid, and moves toward the compression chamber 34 sequentially through the at least one rebound channel 74, the slots 77 of the orifice disc 13, the at least one additional channel 76, the pressure-sensitive bleed valve 51 with the working disc stack 53 being deflected towards the supporting disc 5 by the low pressure of the working fluid, and the at least one compression channel 72, as indicated by the arrow 54. Meanwhile, the working fluid contained in the rebound chamber 36 also moves toward the compression chamber 34 sequentially through the at least one rebound channel 74 and the flow channel 73, as indicated by the arrow 55.

**It** can be seen from Fig. 5 that the pressure-sensitive bleed valve 51 is able to provide damping for a low speed range of the damper in both compression stroke and rebound stroke.

Fig. 6 shows a cutaway cross-sectional view of the piston 32, including the pressure-sensitive bleed valve 51 of the present disclosure, and showing oil flow paths therethrough in rebound and compression strokes and for high damper velocities.

As shown in Fig. 6, where arrows 52, 56, 57 indicate the flow of the working fluid, during the compression stroke, the piston rod 40 and the piston 32 move at high velocities toward the first end 24 of the housing 22. In response to the high-speed movement of the piston rod 40 and the piston 32, the working fluid contained in the compression chamber 34 is compressed and becomes high-pressure working fluid, and moves toward the rebound chamber 36 through the at least one compression channel 72, as indicated by the arrow 56. Meanwhile, the working fluid contained in the compression chamber 34 also moves toward the rebound chamber 36 sequentially through the at least one compression channel 72, the pressure-sensitive bleed valve 51 with the working disc stack 53 being deflected towards the piston body 33 by the high pressure of the working fluid, the at least one additional channel 76, the slots 77 of the orifice disc 13, and the at least one rebound channel 74, as indicated by the arrow 57. Meanwhile, the working fluid contained in the compression chamber 34 also moves toward the rebound chamber 36 sequentially through the slots 79 of the main orifice disc 14, and the at least one rebound channel 74, as indicated by the arrow 52.

As also shown in Fig. 6, where arrows 58, 59 indicate the flow of the working fluid, during the rebound stroke, the piston rod 40 and the piston 32 move at high velocities toward the second end 26 of the housing 22. In response to the high-speed movement of the piston rod 40 and the piston 32, the working fluid contained in the rebound chamber 36 is compressed and becomes high-pressure working fluid, and moves toward the compression chamber 34 through the at least one rebound channel 74, as indicated by the arrow 58. Meanwhile, the working fluid contained in the rebound chamber 36 moves toward the compression chamber 34 sequentially through the at least one rebound channel 74, the slots 77 of the orifice disc 13, the at least one additional channel 76, the pressure-sensitive bleed valve 51 with the working disc stack 53 being deflected towards the supporting disc 5 by the high pressure of the working fluid, and the at least one compression channel 72, as indicated by the arrow 59.

It can be seen from Fig. 6 that the pressure-sensitive bleed valve 51 is also able to provide damping for a high speed range of the damper in both compression stroke and rebound stroke, causing no negative effect on the working of the compression valve 4 and the rebound valve 61.

Parallel arrangement of the pressure-sensitive bleed valve 51 in relation to the main valves (i.e., the compression valve 4 and the rebound valve 61) means that it is not restrictive at high speeds of shock absorber operation. The pressure-sensitive bleed valve 51 provides improvements in vehicle dynamics, while being easy to manufacture. It can also provide symmetrical operation in both compression and rebound strokes.

The foregoing description is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A piston for a damper assembly, comprising:
a piston body defining at least one compression channel, at least one rebound channel, and at least one additional channel, for allowing working fluid to flow through the piston body during a compression stroke and a rebound stroke;
a compression valve covering the at least one compression channel for regulating flow of the working fluid through the piston body during the compression stroke;
a rebound valve covering the at least one rebound channel for regulating flow of the working fluid through the piston body during the rebound stroke; and
a pressure-sensitive bleed valve covering the at least one additional channel, and comprising at least one working disc and an outer disc that is disposed radially outside of the at least one working disc, wherein the at least one working disc is abutted against the outer disc in a radial direction, and is deflectable in two opposite axial directions for regulating flow of the working fluid through the piston body during the compression stroke and the rebound stroke.

2. The piston according to claim 1, wherein the at least one compression channel is in fluid communication with the at least one rebound channel through the at least one additional channel; and
the at least one working disc closes the fluid communication by being abutted against the outer disc, and opens the fluid communication by being deflected towards any of the two opposite axial directions.

3. The piston according to claim 2, wherein
the at least one additional channel is radially spaced from the at least one compression channel and the at least one rebound channel, and is axially spaced from the rebound valve and the compression valve; and
the pressure-sensitive bleed valve is axially located between the compression valve and the at least one additional channel and axially spaced from them.

4. The piston according to claim 3, wherein
the piston body defines a first groove through which the at least one compression channel is in fluid communication with the at least one additional channel, and the pressure-sensitive bleed valve is located in the first groove.

5. The piston according to claim 3 or 4, further comprising:
a supporting disc disposed on a surface of the compression valve facing the pressure-sensitive bleed valve to support the compression valve and prevent it from excessive deflection towards the pressure-sensitive bleed valve during the rebound stroke.

6. The piston according to any one of claims 1 to 5, wherein the rebound valve defines a flow channel for communicating a compression chamber located on a side of the piston with the at least one rebound channel when the rebound valve is not deflected.

7. The piston according to claim 6, wherein the flow channel is formed by a plurality of radially external slots provided on at least one disc of the rebound valve.

8. The piston according to claim 6 or 7, wherein the piston body defines a second groove through which the at least one rebound channel is in fluid communication with the at least one additional channel, and through which the flow channel is in fluid communication with the at least one additional channel.

9. The piston according to any one of claims 1 to 8, wherein the at least one working disc comprises:
a main working disc abutted against the outer disc in the radial direction;
at least one compression working disc disposed on a surface of the main working disc facing the rebound valve, having an outer diameter smaller than that of the main working disc; and
at least one rebound working disc disposed on another surface of the main working disc facing the compression valve, having an outer diameter smaller than that of the main working disc.

10. The piston according to any one of claims 1 to 9, further comprising:
a mounting ring via which the outer disc is clamped against the piston body, having an inner diameter larger than that of the outer disc; and
a spacer via which the at least one working disc is clamped against the piston body, having an outer diameter smaller than that of the at least one working disc.

11. A damper assembly, comprising:
a housing defined a fluid chamber extending along a center axis for containing a working fluid;
a piston according to any one of claims 1 to 10, which is slidably disposed in the fluid chamber and divides the fluid chamber into a rebound chamber and a compression chamber; and
a piston rod extending along the center axis and coupled to the piston for moving the piston between a compression stroke and a rebound stroke.
